# EUROPEAN PATENT APPLICATION

(11) **EP 3 848 560 A1**
(43) Date of publication of application: **14.07.2021**
(21) Application number: 20150608.6
(22) Date of filing: 07.01.2020
(51) Int. Cl.: F01D 25/24, F02C 3/10, F02C 6/12

(54) **TURBOCHARGING ASSEMBLY AND METHOD OF OPERATING A MULTI-STAGE TURBOCHARGING ASSEMBLY AS SINGLE-STAGE TURBOCHARGER**

(71) Applicant: ABB Schweiz AG, 5400 Baden (CH)
(72) Inventor: Mathey, Christoph, 5442 Fislisbach (CH)
(74) Representative: Zimmermann & Partner Patentanwälte mbB

(57) **Abstract**

A turbocharging assembly (100) is described. The turbocharging assembly (100) includes a housing (130) having a first housing part (130A) for enclosing a first stage (110), particularly a low-pressure stage, comprising a first turbine (113) coupled with a first compressor (114), particularly a low-pressure turbine coupled with a low-pressure compressor, and a second housing part (130B) for enclosing a second stage (120), particularly a high-pressure stage. The second housing part (130B) encases an exhaust gas passage unit (140) replacing a second turbine, particularly a high-pressure turbine, the exhaust gas passage unit (140) being configured for providing a gas passage from an exhaust gas inlet (131) provided in the second housing part (130B) to the first turbine (113). Further, a method of operating a multi-stage turbocharging assembly as single-stage turbocharger is described.

## Description

### TECHNICAL FIELD

Embodiments of the present disclosure relate to turbocharging assemblies. In particular, embodiments of the present disclosure relate to single- and multi-stage turbocharging assemblies, e.g. having one or more low-pressure stages and/or one or more high-pressure stages, particularly configured for axial flow.

### BACKGROUND

Multi-stage turbochargers comprise of separate unit turbocharger assemblies interconnected to each other and to an engine charge-air path (e.g. through an intercooler and a charge air cooler). The turbine housings are connected by exhaust piping which allows the flowing of hot gasses: directing engine exhaust firstly to the inlet of a high-pressure turbine, then directing the flow through the outlet of high-pressure turbine to the inlet of low-pressure turbine and, finally, through the outlet path to the environment using exhaust pipes. This type of architecture requires large assemblies' footprints (i.e. the space required for mounting of an assembled unit) on an engine installation, as well as multiple piping connections, bellows, supports, couplings, insulations and structural enhancement brackets aimed at reducing piping vibrations and preventing failure modes. Further, such an arrangement is of considerable complexity in terms of components assemblies, bill of materials, and service. On onboard engine assemblies, where spacing is of prime values, efforts to reduce the overall footprints of multi-stage turbocharges are made. Also, due to the general high temperature of the turbine casings and their relative connecting pipes, bulky heat shields and insulations are used.

Accordingly, in view of the above, there is a demand for improved turbocharging assemblies which at least partially overcome the problems of the state of the art.

### SUMMARY

In light of the above, a turbocharging assembly according to independent claim 1 is provided. Further, a method of operating a multi-stage turbocharging assembly as single-stage turbocharger according to independent claim 13 is provided. Further aspects, advantages, and features are apparent from the dependent claims, the description, and the accompanying drawings.

According to an aspect of the present disclosure, a turbocharging assembly is provided. The turbocharging assembly includes a housing having a first housing part for enclosing a first stage including a first turbine coupled with a first compressor. In particular, the first stage is a low-pressure stage including a low-pressure turbine coupled with a low-pressure compressor. Additionally, the housing has a second housing part for enclosing a second stage, particularly for enclosing a high-pressure stage. The second housing part encases an exhaust gas passage unit. The exhaust gas passage unit replaces a second turbine, particularly a high-pressure turbine. The exhaust gas passage unit is configured for providing a gas passage from an exhaust gas inlet provided in the second housing part to the first turbine, particularly the low-pressure turbine.

Accordingly, beneficially a turbocharging assembly is provided which can be operated as single-stage turbocharging assembly or as multi-stage turbocharging assembly. Thus, the turbocharging assembly of the present disclosure enables the customer to use the turbocharging assembly as a single-stage assembly, or adopting the turbocharging assembly for multi-stage charging. Thus, embodiments of the turbocharging assembly as described herein have the capability of interchanging between turbocharging configurations without the need of substituting casings. In other words, a turbocharging upgrade to multi-stage can be carried out without the requirement of changing turbocharging assembly casings. Further, a multi-stage configuration may be changed to a single-stage configuration while the same housing of the turbocharger assembly can be used for both configurations.

According to another aspect of the present disclosure, a method of operating a multi-stage turbocharging assembly as single-stage turbocharger is provided. The method includes providing a multi-stage turbocharging assembly having a first stage, particularly a low-pressure stage, and a second stage, particularly a high-pressure stage. Additionally, the method includes removing at least one of a second turbine and a second compressor from the second stage. In particular, the second turbine may be a high-pressure turbine and the second compressor may be a high-pressure compressor. Further, the method includes replacing the second turbine with an exhaust gas passage unit. The gas passage unit is configured for providing a gas passage from an exhaust gas inlet to a first turbine of the first stage. In particular, the first turbine may be a low-pressure turbine. Yet further the method includes providing at least one of a first blanking element for closing a second compressor inlet, a second blanking element for closing a second compressor outlet, and an air passage unit replacing the second compressor.

Accordingly, beneficially a method is provided which provides the user with the option to operate a turbocharging assembly as single-stage or multi-stage turbocharger. Accordingly, the user may cost effectively switch between multi-stage and single-stage applications.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic view of a turbocharging assembly according to embodiments described herein operated as a single-stage turbocharging assembly;
- Figs. 2 and 3: show schematic views of a turbocharging assembly according to further embodiments described herein operated as single-stage turbocharging assemblies;
- Fig 4.: shows a schematic side view of a turbocharging assembly according to embodiments described herein, and
- Fig. 5: shows a schematic view of a turbocharging assembly according to embodiments described herein operated as a multi-stage turbocharging assembly.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

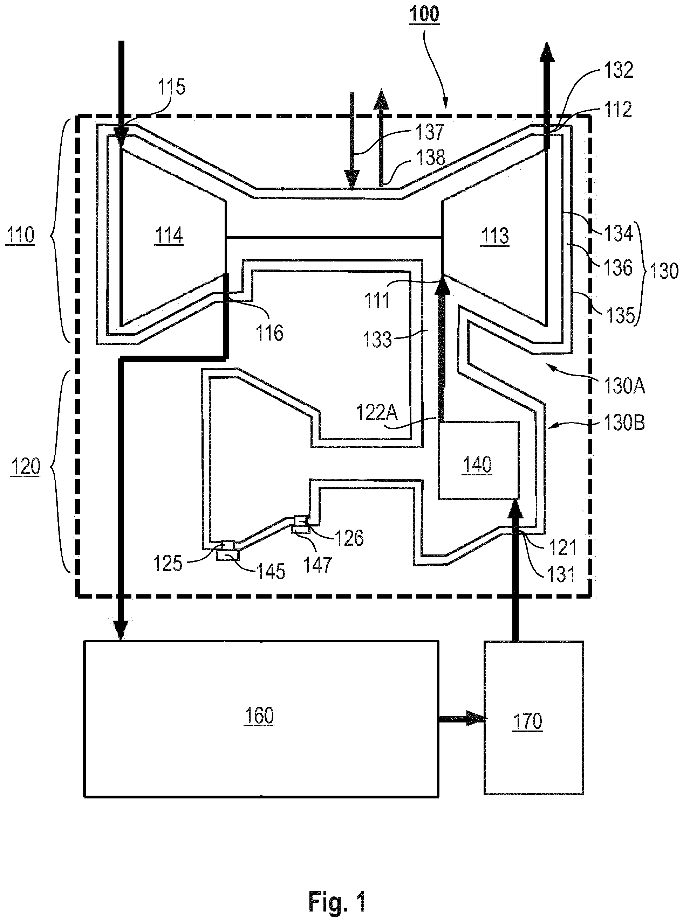

With exemplary reference to Fig. 1, a turbocharging assembly 100 according to the present disclosure is described. Fig. 1 shows a schematic view of a turbocharging assembly 100 operated as a single-stage turbocharging assembly.

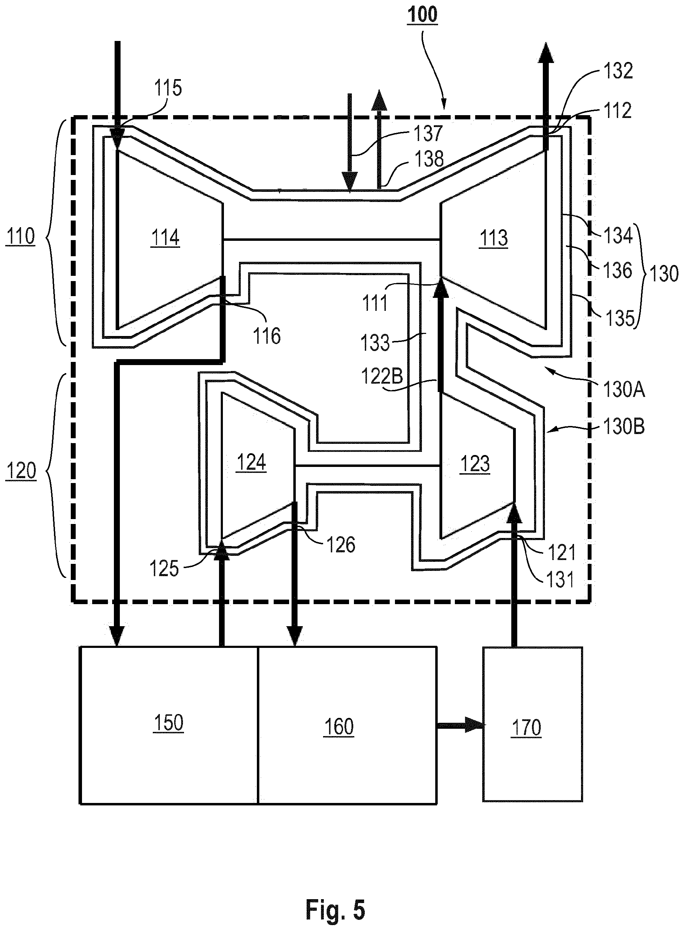

According to embodiments, which can be combined with other embodiments described herein, the turbocharging assembly 100 includes a housing 130 having a first housing part 130A for enclosing a first stage 110 comprising a first turbine 113 coupled with a first compressor 114. In particular, the first stage 110 is a low-pressure stage comprising a low-pressure turbine coupled with a low-pressure compressor. Additionally, the housing 130 has a second housing part 130B for enclosing a second stage 120, particularly for enclosing a high-pressure stage. The second housing part 130B encases an exhaust gas passage unit 140. The exhaust gas passage unit 140 may also be referred to as exhaust gas rectifier. As can be seen by comparing Fig. 1 with Fig. 5, the exhaust gas passage unit 140 replaces a second turbine 123, particularly a high-pressure turbine. The exhaust gas passage unit 140 is configured for providing a gas passage from an exhaust gas inlet 131 provided in the second housing part 130B to the first turbine 113, particularly the low-pressure turbine.

Accordingly, beneficially a turbocharging assembly is provided which can be operated as single-stage turbocharging assembly or as multi-stage turbocharging assembly. Hence, the customer has the option of either using the turbocharging assembly as described herein as a single-stage assembly, or adopting the turbocharging assembly for multi-stage charging.

For better understanding, with reference to Fig. 5 a turbocharging assembly 100 according to embodiments described herein operated as a multi-stage turbocharging assembly is described. The turbocharging assembly 100 includes a high-pressure stage 120 including a high-pressure turbine 123 coupled, particularly mechanically coupled, with a high-pressure compressor 124. Additionally, the multi-stage turbocharging assembly includes a low-pressure stage 110 including a low-pressure turbine 113 coupled, particularly mechanically coupled, with a low-pressure compressor 114. Further, the turbocharging assembly 100 includes a housing 130 enclosing the high-pressure stage 120 and the low-pressure stage 110. In particular, the housing 130 is a single unit. More specifically, the casing 130 integrates the housing of the high-pressure stage 110 and the low-pressure stage 120. In other words, the casing 130 may be an integrated single unit. The housing 130 typically includes a passage 133 between a high-pressure turbine outlet 122B of the high-pressure turbine 123 and a low-pressure turbine inlet 111 of the low-pressure turbine 113. In particular, the passage 133 is a flow optimized passage, i.e. optimized with respect to the flow from the high-pressure turbine outlet 122A of the high-pressure turbine 123 to the low-pressure turbine inlet 111 of the low-pressure turbine 113. Accordingly, beneficially exhaust piping connecting the different stages can be eliminated such that gas flow performance and efficiency can be improved.

According to the present disclosure, a multi-stage turbocharging assembly can be understood as a turbocharging assembly having one or more high-pressure stages and/or one or more low-pressure stages. The one or more high-pressure stages have a high-pressure turbine coupled with a high-pressure compressor. The one or more low-pressure stages have a low-pressure turbine coupled with a low-pressure compressor.

Accordingly, it is to be understood that the housing 130 of the turbocharging assembly as described herein may be configured for enclosing one or more low-pressure stages 110 and/or one or more high-pressure stages 120.

With exemplary reference to Fig. 1, according to embodiments of the turbocharging assembly 100 in a single-stage configuration, which can be combined with other embodiments described herein, a second compressor inlet 125, particularly a high-pressure compressor inlet, of the second housing part 130B is closed by a first blanking element 145. Further, a second compressor outlet 126, particularly a high-pressure compressor outlet, of the second housing part 130B is closed by a second blanking element 147.

Accordingly, it is to be understood that an integrated turbo charging assembly can be provided with the high-pressure segment of the turbo charging assembly omitted and its relevant air/gas path blanked off, e.g. using the exhaust gas passage unit 140 as special insert, the first blanking element 145 and the second blanking element 147. Engine exhaust gasses may enter the turbocharging assembly as per operation on multi-stage and flow through the internal gas passages directly to the single-stage turbine, i.e. the first turbine 113, as exemplarily shown in Fig. 1.

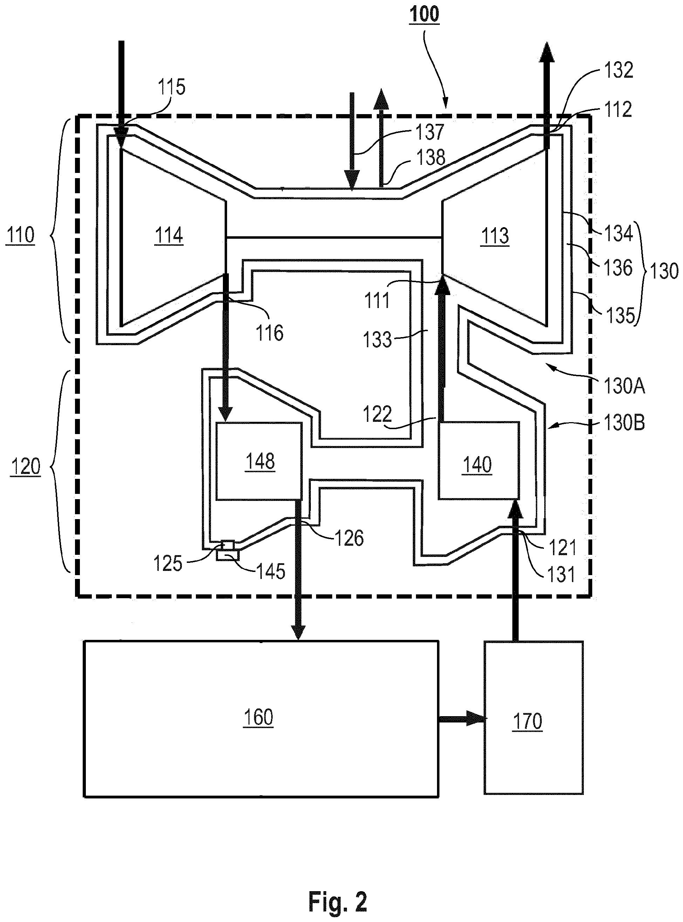

According to embodiments, which can be combined with other embodiments described herein, the second housing part 130B encases an air passage unit 148, as exemplarily shown in Fig. 2. The air passage unit 148 may also be referred to as air rectifier. As can be seen by comparing Fig. 2 with Fig. 5, the air passage unit 148 replaces a second compressor 124, particularly a high-pressure compressor. For example, the exhaust air passage unit 148 may be configured for providing an air passage from an air outlet 116 provided in the first housing part 130A to a charge air cooler 160, as exemplarily shown in Fig. 2. The second compressor inlet 125, particularly the high-pressure compressor inlet, of the second housing part 130B can be closed by a first blanking element 145.

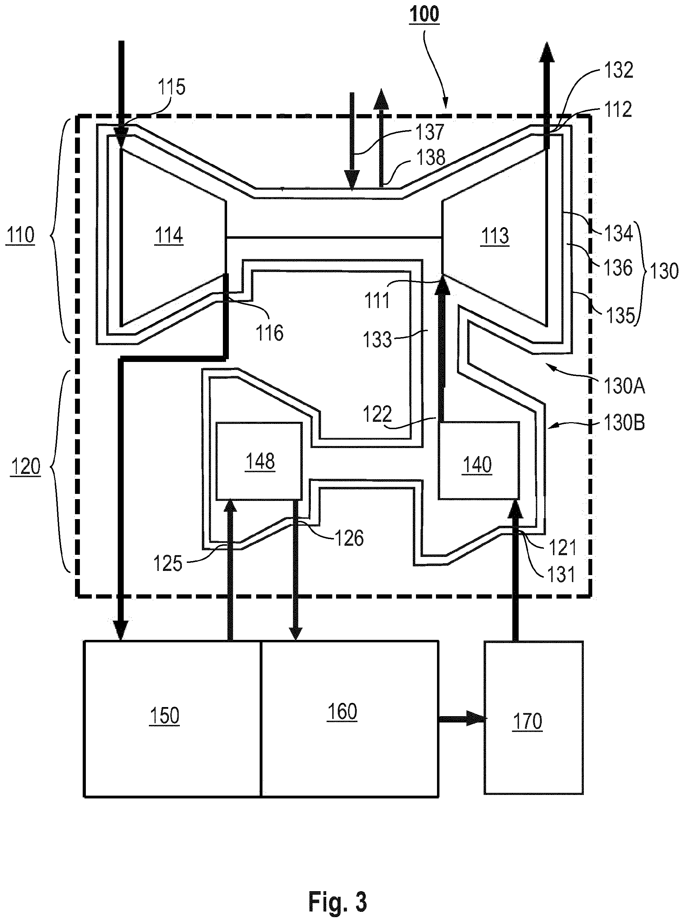

As exemplarily shown in Figs. 1, 2 and 3, the turbocharging assembly 100 may include a charge air cooler 160. Further, an intercooler 150 may be provided, as exemplarily shown in Fig. 3. According to embodiments, which can be combined with other embodiments described herein, the air passage unit 148 can be configured for providing an air passage from the intercooler 150 to the charge air cooler 160, as shown in Fig. 3.

According to embodiments, which can be combined with other embodiments described herein, the housing 130 includes a passage 133, particularly a flow optimized passage, between an outlet of the gas passage unit 140 and a first turbine inlet 111 of the first turbine 113. In particular, the first turbine 113 being a low-pressure turbine and the first turbine inlet 111 being a low-pressure turbine inlet.

According to embodiments, which can be combined with other embodiments described herein, the housing 130 an inner casing 134 and an outer casing 135, as exemplarily shown in Figs. 1, 2, 3 and 5. An intermediate space 136 is provided between the inner casing 134 and the outer casing 135. Typically, the intermediate space 136 is configured for providing a coolant. For instance, the housing 130 may include a coolant inlet 137 for providing coolant into the intermediate space 136 and a coolant outlet 138 for removing coolant from the intermediate space 136. Accordingly, it is to be understood that the housing may include an integrated cooling space and one or more integrated cooling channels for providing the coolant. Hence, beneficially a continuous cooling system may be incorporated into the housing, e.g. by providing a double walled casing with an intermediate space for providing a coolant jacket. Thus, additional heat shielding for shielding heat from the casing during operation of the turbocharging assembly can be reduced or even eliminated.

According to embodiments, which can be combined with other embodiments described herein, the housing 130 is a single unit or single piece structure. In case of an implementation of the housing having an inner casing 134 and an outer casing 135, the inner casing 134 can be an integrated single unit. Accordingly, the outer casing 135 may be an integrated single unit.

A single unit or single piece structure as referred to herein may be an integrated single piece structure of casted material. For instance, the casted material can be an aluminum alloy or other alloys. Further it is to be understood that the casing may be made of other materials such as steel casting, grey cast iron, or other suitable casting materials. According to an example, the casing as described herein is a single casted casing, particularly an ALFIN casing, or a casing of two or more different materials.

According to embodiments, which can be combined with other embodiments described herein, the second housing part 130B may be arranged below the first housing part 130A. Alternatively, the first housing part 130A may be arranged below second housing part 130B.

According to embodiments, which can be combined with other embodiments described herein, the first housing part 130A includes a first compressor outlet 116, particularly a low-pressure compressor outlet, for providing low-pressure air to a charge air cooler 160, as exemplarily shown in Figs. 1 and 3. Alternatively, low-pressure air may be provided from the first compressor outlet 116 to the air passage unit 148, as exemplarily shown in Fig. 2.

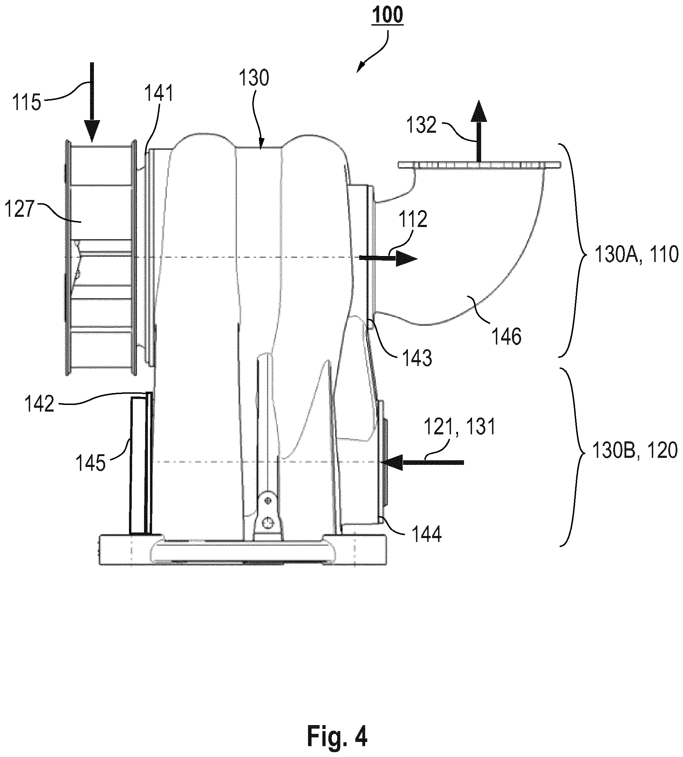

Fig. 4 shows a schematic side view of a turbocharging assembly according to embodiments described herein. According to embodiments, which can be combined with other embodiments described herein, the first housing part 130A includes a first flange 141 for connecting a silencer, an inlet casing, or an inlet pipe to the first compressor inlet 115, particularly the low-pressure compressor inlet. As an example, Fig. 4 shows a silencer 127 connected to the first flange 141.

According to embodiments, which can be combined with other embodiments described herein, the second housing part 130B includes a second flange 142 for connecting one element selected from the group consisting of a first blanking element 145, an inlet casing or inlet pipe, particularly an elbow inlet casing or elbow inlet pipe, to a second compressor inlet 125 (see Fig. 1). Typically, second compressor inlet 125 is high-pressure compressor inlet of the second housing part 130B.

According to embodiments, which can be combined with other embodiments described herein, the first housing part 130A includes a third flange 143 for connecting an exhaust gas outlet 132 for providing exhaust gas from the first turbine 113, particularly the low-pressure turbine, to the outside of the housing 130. In particular, the exhaust gas outlet 132 is a first turbine outlet 112.

According to embodiments, which can be combined with other embodiments described herein, the second housing part 130B includes a fourth flange 144 for connecting the exhaust gas inlet 131 for providing exhaust gas from an engine 170 towards the gas passage unit 140 (see Figs. 1 to 3) or the second turbine 123 (see Fig. 5) inside the second housing part 130B. In particular, the exhaust gas inlet 131 can be a second turbine inlet 121.

According to another aspect of the present disclosure, a method of operating a multi-stage turbocharging assembly as single-stage turbocharger is provided. The method includes providing a multi-stage turbocharging assembly having a first stage 110, particularly a low-pressure stage, and a second stage 120, particularly a high-pressure stage. Additionally, the method includes removing at least one of a second turbine 123 and a second compressor 124 from the second stage 120. In particular, the second turbine 123 may be a high-pressure turbine and the second compressor 124 may be a high-pressure compressor. Further, the method includes replacing the second turbine 123 with an exhaust gas passage unit 140. The gas passage unit 140 is configured for providing a gas passage from an exhaust gas inlet 131 to a first turbine 113 of the first stage 110. In particular, the first turbine 113 may be a low-pressure turbine.

Yet further the method includes providing at least one of a first blanking element 145 for closing a second compressor inlet 125, a second blanking element 147 for closing a second compressor outlet 126, and an air passage unit 148 replacing the second compressor 124 (compare Figs. 2 and 3 with Fig. 5). For example, in the embodiment as shown in Fig. 1, a first blanking element 145 for closing a second compressor inlet 125 and a second blanking element 147 for closing a second compressor outlet 126 are provided. In the embodiment as shown in Fig. 2, an air passage unit 148 and a first blanking element 145 for closing the second compressor inlet 125 are provided. Fig. 3 shows an embodiment in which air form the intercooler 150 is provided to the air passage unit 148 via the second compressor inlet 125 and after the air passage unit 148 the air is provided to the charge air cooler 160 via the second compressor outlet.

Accordingly, it is to be understood, that the exhaust air passage unit 148 can be configured for providing an air passage from the air outlet 116 provided in the first housing part 130A to the charge air cooler 160 (see Fig. 2), or for providing an air passage from the intercooler 150 to the charge air cooler 160 (see Fig. 3). Further, it is to be understood that the method as described herein may be conducted by using a turbocharging assembly 100 as described herein.

In view of the present disclosure, it is to be understood that embodiments as described herein, provide for a turbocharging assembly which can be operated as single-stage turbocharging assembly or as multi-stage turbocharging assembly. Accordingly, the customer has the option of either using the turbocharging assembly as described herein as a single-stage assembly, or adopting the turbocharging assembly for multi-stage charging. The option of switching the application from multi-stage to single-stage or vice versa allows the user to have a single assembly unit covering both turbocharging requirements. Providing a single-stage turbocharging option for a multi-stage turbocharger assembly housing allows to cost effectively and quickly upgrade the already existing and installed housing from a single-stage turbo charging to a multi-stage by replacing the internal components.

Beneficially, the turbocharging assembly according to embodiments described herein is configured as integrated unit which provides for reduced assemblies' footprint (i.e. the space required for mounting of an assembled unit). Further, compared to the state of the art piping connections, bellows, supports, couplings, insulations and structural enhancement brackets (aimed at reducing piping vibrations and preventing failure modes) can be reduced or even eliminated. Yet further, embodiments of the present disclosure provide for the possibility to implement an integrated cooling, i.e. a liquid cooled casing, minimizing the need of using bulky heat shields and/or insulation.

While the foregoing is directed to embodiments, other and further embodiments may be devised without departing from the basic scope, and the scope is determined by the claims that follow.

### REFERENCE NUMBERS

- 100: turbocharging assembly
- 110: first stage / low-pressure stage
- 111: first turbine inlet/ low-pressure turbine inlet
- 112: first turbine outlet/ low-pressure turbine outlet
- 113: first turbine/ low-pressure turbine
- 114: first compressor/ low-pressure compressor
- 115: first compressor inlet/ low -pressure compressor inlet
- 116: first compressor outlet/ low -pressure compressor outlet
- 120: second stage/ high-pressure stage
- 121: second turbine inlet/ high -pressure turbine inlet
- 122A: outlet of exhaust gas passage unit
- 122B: second turbine outlet/ high-pressure turbine outlet
- 123: second turbine/ high-pressure turbine
- 124: second compressor/ high-pressure compressor
- 125: second compressor inlet/ high-pressure compressor inlet
- 126: second compressor outlet/ high-pressure compressor outlet
- 127: silencer
- 130: housing
- 130A: first housing part
- 130B: second housing part
- 131: exhaust gas inlet
- 132: exhaust gas outlet
- 133: passage
- 134: inner casing
- 135: outer casing
- 136: intermediate space
- 137: coolant inlet
- 138: coolant outlet
- 140: exhaust gas passage unit
- 141: first flange
- 142: second flange
- 143: third flange
- 144: fourth flange
- 145: first blanking element/plate
- 146: elbow outlet pipe
- 147: second blanking element/plate
- 148: air passage unit
- 150: intercooler
- 160: charge air cooler
- 170: engine

## Claims

1. A turbocharging assembly (100), comprising a housing (130) having a first housing part (130A) for enclosing a first stage (110), particularly a low-pressure stage, comprising a first turbine (113) coupled with a first compressor (114), particularly a low-pressure turbine coupled with a low-pressure compressor, and a second housing part (130B) for enclosing a second stage (120), particularly a high-pressure stage,
wherein the second housing part (130B) encases an exhaust gas passage unit (140) replacing a second turbine, particularly a high-pressure turbine, the exhaust gas passage unit (140) being configured for providing a gas passage from an exhaust gas inlet (131) provided in the second housing part (130B) to the first turbine (113).

2. The turbocharging assembly (100) of claim 1, wherein a second compressor inlet (125), particularly a high-pressure compressor inlet, of the second housing part (130B) is closed by a first blanking element (145), and wherein a second compressor outlet (126), particularly a high-pressure compressor outlet, of the second housing part (130B) is closed by a second blanking element (147).

3. The turbocharging assembly (100) of claim 1, wherein the second housing part (130B) encases an air passage unit (148) replacing a second compressor (124), particularly a high-pressure compressor, the exhaust air passage unit (148) being configured for providing an air passage from an air outlet (116) provided in the first housing part (130A) to a charge air cooler (160).

4. The turbocharging assembly (100) of claim 3, wherein a second compressor inlet (125), particularly a high-pressure compressor inlet, of the second housing part (130B) is closed by a first blanking element (145).

5. The turbocharging assembly (100) of claim 3, further comprising an intercooler (150), wherein the air passage unit (148) is configured for providing an air passage from the intercooler (150) to the charge air cooler (160).

6. The turbocharging assembly (100) of any of claims 1 to 5, wherein the housing (130) comprises a passage (133), particularly a flow optimized passage, between an outlet of the gas passage unit (140) and a first turbine inlet (111) of the first turbine (113), particularly a low-pressure turbine inlet of the low-pressure turbine .

7. The turbocharging assembly (100) of any of claims 1 to 6, wherein the housing (130) comprises an inner casing (134) and an outer casing (135), wherein an intermediate space (136) is provided between the inner casing (134) and the outer casing (135), and wherein the intermediate space (136) is configured for providing a coolant.

8. The turbocharging assembly (100) of any of claims 1 to 7, wherein the housing (130) comprises a coolant inlet (137) for providing coolant into the intermediate space (136) and a coolant outlet (138) for removing coolant from the intermediate space (136).

9. The turbocharging assembly (100) of any of claims 1 to 8, wherein the housing 130 is a single piece structure, particularly an integrated single piece structure of casted material.

10. The turbocharging assembly (100) of any of claims 1 to 9, wherein the second housing part (130B) is arranged below the first housing part (130A) or vice versa.

11. The turbocharging assembly (100) of any of claims 1 to 10, wherein the first housing part (130A) comprises a first compressor outlet (116), particularly a low-pressure compressor outlet, particularly for providing low-pressure air to a charge air cooler (160) and/or an air passage unit (148).

12. Method of operating a multi-stage turbocharging assembly as single-stage turbocharger, comprising:
- providing a multi-stage turbocharging assembly having a first stage (110), particularly a low-pressure stage, and a second stage (120), particularly a high-pressure stage;
- removing at least one of a second turbine (123) and a second compressor (124), particularly removing at least one of a high-pressure turbine and a high-pressure compressor, from the second stage (120), and
- replacing the second turbine (123) with an exhaust gas passage unit (140) configured for providing a gas passage from an exhaust gas inlet (131) to a first turbine (113), particularly a low-pressure turbine, of the first stage (110),
- and providing at least one of a first blanking element (145) for closing a second compressor inlet (125), a second blanking element (147) for closing a second compressor outlet (126), and an air passage unit (148) replacing the second compressor (124).

13. The method of claim 12, wherein the air passage unit (148) is configured for providing an air passage from an air outlet (116) provided in the first housing part (130A) to a charge air cooler (160), or wherein the exhaust air passage unit (148) is configured for providing an air passage from an intercooler (150) to the charge air cooler (160).

14. The method of claim 12 or 13, wherein the method is conducted by using a turbocharging assembly (100) according to any of claims 1 to 11.
